# EUROPEAN PATENT SPECIFICATION

(11) **EP 1 000 535 B1**
(45) Date of publication and mention of the grant of the patent: **02.07.2003**
(21) Application number: 99203719.2
(22) Date of filing: 08.11.1999
(51) Int. Cl.: A01J 5/013, A01J 5/01

(54) **A method of establishing the quality and/or composition of milk**
VERFAHREN ZUR ERFASSUNG DER QUALITÄT UND/ODER ZUSAMMENSETZUNG VON MILCH
Procédé permettant d'établir la qualité et/ou la composition du lait

(30) Priority: 12.11.1998 NL 1010540
(43) Date of publication of application: 17.05.2000
(73) Proprietor: MAASLAND N.V., 3155 PD Maasland (NL)
(72) Inventor: Van den Berg, Karel, 2971 BR Bleskensgraaf (NL); Vijverberg, Helena Geralda Maria, 3123 NJ Schiedam (NL); Van Lier, Wilhelmus Johannes Adrianus, 2623 MS Delft (NL)
(74) Representative: Corten, Maurice Jean F.M.

(56) References cited:
- DE-A- 2 759 126
- NL-A- 9 402 010
- NL-C- 1 004 980
- US-A- 4 447 725
- US-A- 5 252 829
- US-A- 5 258 620

## Description

The invention relates to a method of determining the quality and/or the composition of milk by means of measurements according to the preamble of claim 1.

Such method is known from the document NL 1004980. This document discloses a method in which the intensity values of a number of colours in the milk are established and in which the milk is yielded from individual animals. By comparing the intensity values with the values recorded during previous milkings, the presence of specific substances, such as contaminations, is established. This method has the disadvantage that the intensity values of the milk vary to a great extent, depending on the amount of surrounding light. Moreover the results cannot be interpreted quantitatively, as only changes relative to previous milkings are recorded.

The invention aims at obviating the above-mentioned drawbacks or at least minimizing same. In accordance with the invention this is achieved by the characterizing features of claim 1. In this manner the radiation intensity of the background is established. This makes it possible to correct the radiation intensities that are measured when the sources are switched on. In a preferred embodiment the periods of time for establishing the reflected radiation intensities are constant. In this manner it is achieved that the established radiation intensities can easily be compared. One or more values of one or more established reflected radiation intensities can be stored in a memory, so that the values can be compared with previously obtained values.

On the basis of the values of the established radiation intensities there is determined a proportion of the values. A calibration value is formed by the progressive average of the values and/or proportions of the values obtained for a specific animal during a defined number of most recent milkings. A calibration value can also be formed by a measurement effected on a calibration means such as a transparent liquid, reference milk, a calibration rod, white paper, a white tile, rinsing liquid or water. The values can also be compared with previous calibration values. In a preferred embodiment, the values and/or proportions of values are compared, both mutually and with previous values and/or calibration values and/or proportions recorded during one or more previous measurements, and the results of this comparison process are indicated. According to an inventive feature, the results of the comparison process are displayed in such a manner that the presence and/or concentration of specific substances, such as contaminations in the milk, can be read immediately.

According to a further inventive feature, a further receiver receives the radiation directly from the source, and the value obtained by the first receiver is adjusted with the aid of a value obtained by the further receiver. In this manner it is possible to establish the intensity of the radiation emitted by the source. When the source ages, which is not only relevant to radioactive sources, but also to incandescent lamps, or when the source is contaminated, the intensity of the radiation will decrease. This will affect the value of the established radiation intensity. Said value can be corrected by means of the value of the radiation intensity established by the further receiver. It is also possible to adjust one or more proportions of values by means of values obtained by the further receiver receiving the radiation directly from the source.

In a preferred embodiment the source and the receiver are coupled to a periodic signal, such as a square signal or a saw-tooth signal, said receiver establishing the radiation intensity when the source has almost attained a constant intensity. By means of the periodic signal there is achieved a synchronization of the source and the receiver. First the source is switched on, whereupon the receiver establishes the radiation intensity. Many sources have a heating-up time before attaining a constant or maximum intensity. After the heating-up time has elapsed, it is possible for the receiver to establish the radiation intensity. The source can also be switched on directly by the periodic signal.

According to another inventive feature, the source comprises light sources emitting radiation having one or more discrete wavelengths, which wavelengths relate to the absorption characteristic of specific substances in the milk, such as proteins or fats, and the receiver establishes the radiation intensity, and the presence and/or concentration of one or more substances in the milk is established. In this way it is achieved that the milk is irradiated with a radiation having a wavelength which is absorbed by specific substances in the milk. By comparing the intensity of the emitted radiation with the radiation established by the receiver, it is possible to establish the light absorption of a specific wavelength. Thus it is possible not only to demonstrate the presence of a specific substance, but also to determine the concentration of said substance.

In accordance with an inventive feature, the measurement of the composition of the milk comprises the establishment of the presence and/or quantity of one or more of the following substances: blood, urine, excrements, contamination, Ecoli bacteria, hormones, flocks, rinsing liquid, air. All these substances can be established by measuring the reflected radiation of the source. Besides, the measurement also comprises the establishment of the fat content and/or the cell count and/or mastitis and/or colostrum and/or grass milk (milk produced after the consumption of grass).

In a preferred embodiment, the measurements are effected on milk yielded from individual animals. In this manner it is possible to check the quality of the milk of an individual animal. When the animal is on heat, or is in a bad condition, e.g. due to illness, this can be detected in time. The measurements can also be effected on milk yielded from separate udder quarters. The values and/or proportions of values can be compared mutually as well as with previous values and/or values obtained from different udder quarters, and the results of this comparison process can be indicated. In this manner it is possible for example to separate in time milk containing blood or pus yielded from an udder quarter before this milk is mixed with milk yielded from the other quarters.

According to a further inventive feature, one or more measurements are effected when the flow sensor indicates that the milk is flowing. In this manner it is achieved that measurements are effected during milking. In a preferred embodiment, the source comprises light sources which irradiate the milk consecutively or simultaneously with red-coloured, green-coloured, blue-coloured light, and which are switched off consecutively or simultaneously. According to a further inventive feature, the proportions RG, RB and GB of the established radiation intensities are calculated as RG=(r-a)/(g-a), RB=(r-a)/(b-a), GB=(g-a)/(b-a), r being the established radiation intensity during irradiation of the milk by a source of red-coloured light, g being the established radiation intensity during irradiation of the milk by a source of green-coloured light, b being the established radiation intensity during irradiation of the milk by a source of blue-coloured light and a being the established radiation intensity during the period of time when the light sources are switched off.

The proportions RG, RB and GB can be multiplied by correction factors depending on the calibration values. These calibration values can be based on measurements effected on reference liquids. The proportions can also be multiplied by the values of the radiation intensities established by the further receiver receiving the radiation directly from the light source.

In a further embodiment the feeding of an animal is established on the basis of a measurement effected on the milk. By measuring the milk there can be established that for example the colour green has a rather high intensity. This is an indication that the animal has consumed grass instead of the usual portion of concentrate.

The invention will now be explained in further detail with reference to the accompanying drawings, in which
Figure 1 shows a milking system provided with the colour measuring system;
Figure 2 shows a milk line on which there is disposed a sensor;
Figure 3 shows an embodiment of the sensor not in accordance with the invention, and
Figure 4 shows another embodiment of the sensor.

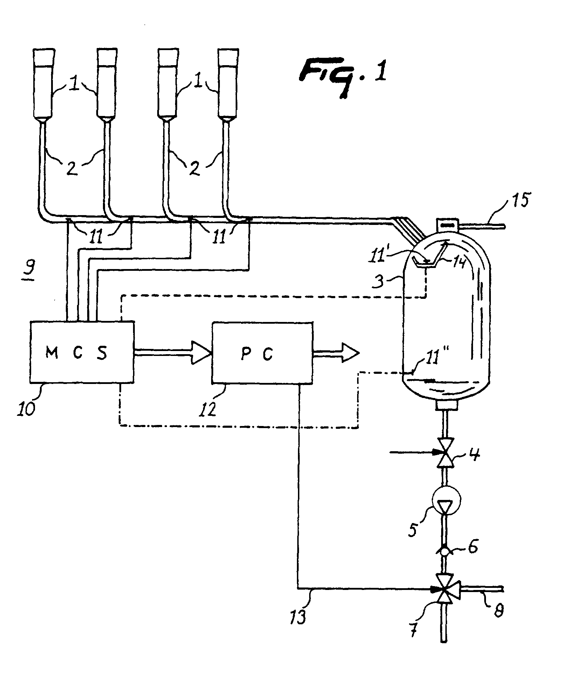

Figure 1 shows four teat cups 1 to be connected to the teats of an animal to be milked, the milk lines 2 of said teat cups 1 debouching into a milk glass 3. To the milk glass 3 there is further connected a vacuum line 15 for the purpose of applying a vacuum in the milk glass 3 itself, in the milk lines 2 and in the teat cups 1, said vacuum being required to keep the teat cups connected to the teats of the animal, to milk and to separate the milk and the air present therein from each other. From the milk glass 3 the milk obtained is discharged, via a valve 4, a pump 5, a non-return valve 6 and a three-way valve 7, through a line 8, to a (non-shown) milk tank.

In the figure there is further indicated a colour measuring system 9 comprising a processing unit 10 to which four colour sensors 11 are connected. These sensors 11 are preferably disposed on the milk lines 2 of the individual teat cups 1. In other embodiments the sensors 11 may also be disposed in the milk glass 11", in the milk, or in an overflow reservoir 14. The processing unit records the values measured by the sensor. These measured values can be passed to a computer 12 for being processed further.

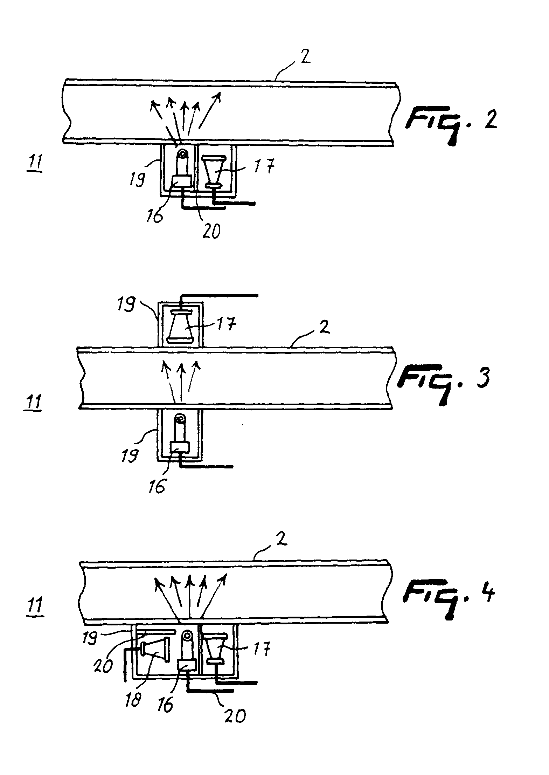

Figure 2 shows a sensor 11 which is included in a milk line 2. The sensor 11 consists of a light source 16 and a receiver 17, disposed together in a housing 19. The receiver 17 is provided with screening means, so that only the light from the light source 16 reflected by the milk is received by the receiver 17. The housing 19 is preferably designed such that the light source and the receiver are screened from surrounding light. In a preferred embodiment the light source is a multicolour LED by means of which the milk can be irradiated with different colours of light. The LED can be activated by means of a periodic signal, such as a square signal or a saw-tooth signal. The receiver can also be coupled to this signal, so that both the source and the receiver are synchronized. Each time when the source attains a constant intensity, the reflected and/or absorbed amount of radiation is established by the receiver.

Figure 3 shows a sensor not in accordance with the invention in an arrangement in which the receiver 17 is located opposite the source 16. In this case the quality of the milk is measured by means of the absorption of radiation of different wavelengths. In this situation the absorbed quantity of light of specific wavelengths is a measure for the presence and/or concentration of specific substances in the milk. Both the source and the receiver are accommodated in a separate housing.

Figure 4 finally shows an alternative embodiment in which a further receiver 18 is disposed in the sensor, which further receiver 18 measures the radiation directly from the source. In this manner the intensity of the radiation emitted by the source can be established. When the source ages, or when the source is contaminated, the intensity of the radiation will decrease. This will affect the value of the established radiation intensity. Said value can be corrected by means of the value of the radiation intensity established by the further receiver.

## Claims

1. A method of determining the quality and/or the composition of milk by means of measurements, in which method:
a source irradiates the milk consecutively with radiation of different wavelengths, while, during at least part of the time when the source is switched on, a receiver establishes reflected radiation intensities during a period of time;
the values of the thus obtained radiation intensities are stored in a memory;
the values are compared mutually as well as with previous values recorded during a previous measurement; and
that the results of this comparison process are indicated, **characterized in that** during a measurement the source is switched off, while, during at least part of the time when the source is switched off, the receiver establishes reflected radiation intensities during a period of time; **in that** the values of the thus obtained radiation intensities are stored as background values in a memory; **in that** the background values are incorporated in the values obtained during the period of time when the source is switched on; and **in that** the values adjusted by the background values are stored in a memory.

2. A method as claimed in claim 1, **characterized in that** a proportion of the values and/or background values are determined.

3. A method as claimed in claim 1 or 2, **characterized in that** a calibration value is formed by the progressive average of the values and/or proportions of values obtained for a specific animal during a defined number of most recent milkings.

4. A method as claimed in any one of claims 1 to 3, **characterized in that** a calibration value is formed by a measurement effected on a calibration means such as a transparent liquid, reference milk, a calibration rod, rinsing liquid or water.

5. A method as claimed in claim 3 or 4, **characterized in that** the values are compared with previous calibration values.

6. A method as claimed in any one of claims 1 to 5, **characterized in that** the values and/or proportions of values are compared, both mutually and with previous values and/or calibration values and/or proportions recorded during one or more previous measurements, and the results of this comparison process are indicated.

7. A method as claimed in claim 6, **characterized in that** the results of the comparison process are displayed in such a manner that the presence and/or concentration of specific substances, such as contaminations in the milk, can be read immediately.

8. A method as claimed in any one of claims 1 to 7, **characterized in that** a further receiver receives the radiation directly from the source, and the value obtained by the first receiver is adjusted with the aid of a value obtained by the further receiver.

9. A method as claimed in claim 8, **characterized in that** one or more proportions are adjusted by means of values obtained by the further receiver receiving the radiation directly from the source.

10. A method as claimed in any one of claims 1 to 9, **characterized in that** the source and the receiver are coupled to a periodic signal, such as a square signal or a saw-tooth signal, said receiver establishing the radiation intensity when the source has almost attained a constant intensity.

11. A method as claimed in any one of claims 1 to 10, **characterized in that** the source comprises light sources emitting radiation having one or more discrete wavelengths, which wavelengths relate to the absorption characteristic of specific substances in the milk, such as proteins or fats, that the receiver establishes the radiation intensity, that the presence and/or concentration of one or more substances in the milk is established.

12. A method as claimed in any one of claims 1 to 11, **characterized in that** the measurement of the composition of the milk comprises the establishment of the presence and/or quantity of one or more of the following substances: blood, urine, excrements, contamination, Ecoli bacteria, hormones, flocks, rinsing liquid, air.

13. A method as claimed in any one of claims 1 to 12, **characterized in that** the measurement of the composition of the milk comprises the establishment of the fat content and/or the cell count and/or mastitis and/or colostrum and/or grass milk (milk produced after the consumption of grass).

14. A method as claimed in any one of claims 1 to 13, **characterized in that** the measurements are effected on milk yielded from individual animals.

15. A method as claimed in any one of claims 1 to 14, **characterized in that** the measurements are effected on milk yielded from separate udder quarters.

16. A method as claimed in any one of claims 1 to 15, **characterized in that** the values and/or proportions of values are compared mutually as well as with previous values and/or values obtained from different udder quarters, and the results of this comparison process are indicated.

17. A method as claimed in any one of claims 1 to 16, **characterized in that** one or more measurements are effected when a flow sensor indicates that the milk is flowing.

18. A method as claimed in any one of claims 1 to 17, **characterized in that** the source comprises light sources which irradiate the milk consecutively or simultaneously with red-coloured, green-coloured, blue-coloured light, and which are switched off consecutively or simultaneously.

19. A method as claimed in claim 18, **characterized in that** the proportions RG, RB and GB of the established radiation intensities are calculated as RG=(r-a)/(g-a), RB=(r-a)/(b-a), GB=(g-a)/(b-a), r being the established radiation intensity during irradiation of the milk by a source of red-coloured light, g being the established radiation intensity during irradiation of the milk a source of green-coloured light, b being the established radiation intensity during irradiation of the milk by a source of blue-coloured light and a being the established radiation intensity during the period of time when the light sources are switched off.

20. A method as claimed in claim 19, **characterized in that** the proportions RG, RB and GB are multiplied by correction factors depending on the calibration values.

21. A method as claimed in any one of claims 1 - 20, **characterized in that** the feeding of an animal is established on the basis of a measurement on the milk.

## Patentansprüche

1. Verfahren zum Ermitteln der Qualität und/oder der Zusammensetzung von Milch mit Hilfe von Messungen, wobei bei dem Verfahren
eine Quelle die Milch nacheinander mit Strahlung unterschiedlicher Wellenlänge bestrahlt, wobei ein Empfänger während zumindest eines Teiles der Zeit, in der die Quelle eingeschaltet ist, die Stärke der reflektierten Strahlung über einen Zeitraum hinweg mißt;
die Werte der auf diese Weise gemessenen Strahlungsstärke in einem Speicher gespeichert werden;
die Werte miteinander sowie mit früheren Werten verglichen werden, die während einer früheren Messung aufgezeichnet wurden; und
die Ergebnisse dieses Vergleichsvorganges angezeigt werden,
**dadurch gekennzeichnet, daß** während einer Messung die Quelle abgeschaltet wird, wobei der Empfänger während zumindest eines Teiles der Zeit, in der die Quelle abgeschaltet ist, die Stärke der reflektierten Strahlung über einen Zeitraum hinweg mißt; daß die Werte der auf diese Weise gemessenen Strahlungsstärke als Hintergrundwerte in einem Speicher gespeichert werden; daß die Hintergrundwerte in die Werte integriert werden, die während der Zeit, als die Quelle eingeschaltet war, gewonnen wurden; und daß die durch die Hintergrundwerte berichtigten Werte in einem Speicher gespeichert werden.

2. Verfahren nach Anspruch 1,
**dadurch gekennzeichnet, daß** ein Verhältnis der Werte und/oder der Hintergrundwerte ermittelt wird.

3. Verfahren nach Anspruch 1 oder 2,
**dadurch gekennzeichnet, daß** ein Eichwert gebildet wird durch den dynamischen Mittelwert der Werte und/oder der Verhältnisse von Werten, die für ein bestimmtes Tier während einer bestimmten Anzahl von kürzlich erfolgten Melkvorgängen ermittelt wurden.

4. Verfahren nach einem der Ansprüche 1 bis 3,
**dadurch gekennzeichnet, daß** ein Eichwert gebildet wird durch eine Messung, die an einem Eichmittel, wie z. B. einer durchsichtigen Flüssigkeit, einer Referenzmilch, einem Eichstab, einer Spülflüssigkeit oder Wasser, vorgenommen wird.

5. Verfahren nach Anspruch 3 oder 4,
**dadurch gekennzeichnet, daß** die Werte mit früheren Eichwerten verglichen werden.

6. Verfahren nach einem der Ansprüche 1 bis 5,
**dadurch gekennzeichnet, daß** die Werte und/oder Verhältnisse von Werten sowohl miteinander als auch mit früheren Werten und/oder Eichwerten und/oder Verhältnissen verglichen werden, die bei einer oder mehreren früheren Messungen aufgezeichnet wurden, und die Ergebnisse dieses Vergleichsvorganges angezeigt werden.

7. Verfahren nach Anspruch 6,
**dadurch gekennzeichnet, daß** die Ergebnisse des Vergleichsvorganges in der Weise angezeigt werden, daß das Vorhandensein und/oder die Konzentration bestimmter Substanzen, wie z. B. Verunreinigungen in der Milch, sofort abgelesen werden können.

8. Verfahren nach einem der Ansprüche 1 bis 7,
**dadurch gekennzeichnet, daß** ein weiterer Empfänger die Strahlung direkt von der Quelle empfängt und der von dem ersten Empfänger ermittelte Wert mit Hilfe eines Wertes berichtigt wird, der von dem weiteren Empfänger ermittelt wurde.

9. Verfahren nach Anspruch 8,
**dadurch gekennzeichnet, daß** ein oder mehrere Verhältnisse mit Hilfe von Werten berichtigt werden, die von dem weiteren Empfänger ermittelt werden, der die Strahlung direkt von der Quelle erhält.

10. Verfahren nach einem der Ansprüche 1 bis 9,
**dadurch gekennzeichnet, daß** die Quelle und der Empfänger mit einem periodischen Signal, wie z. B. einem Rechtecksignal oder einem Sägezahnsignal, gekoppelt sind, wobei der Empfänger die Strahlungsstärke mißt, wenn die Quelle fast eine konstante Stärke erreicht hat.

11. Verfahren nach einem der Ansprüche 1 bis 10,
**dadurch gekennzeichnet, daß** die Quelle Lichtquellen umfaßt, die Strahlung mit einer oder mehreren separaten Wellenlängen aussenden, wobei sich die Wellenlängen auf die Absorptionscharakteristika bestimmter Substanzen in der Milch, wie z. B. Proteine oder Fette, beziehen, daß der Empfänger die Strahlungsstärke mißt, daß das Vorhandensein und/oder die Konzentration einer oder mehrerer Substanzen in der Milch ermittelt wird.

12. Verfahren nach einem der Ansprüche 1 bis 11,
**dadurch gekennzeichnet, daß** die Ermittlung der Milchzusammensetzung das Ermitteln des Vorhandenseins und/oder der Menge einer oder mehrerer der folgenden Substanzen umfaßt: Blut, Urin, Exkremente, Verschmutzung, Kolibakterien, Hormone, Flocken, Spülflüssigkeit, Luft.

13. Verfahren nach einem der Ansprüche 1 bis 12,
**dadurch gekennzeichnet, daß** die Ermittlung der Milchzusammensetzung die Ermittlung des Fettgehalts und/oder des Keimgehalts und/oder von Mastitis und/oder Kolostrum und/oder Grasmilch (nach dem Verzehr von Gras gebildete Milch) umfaßt.

14. Verfahren nach einem der Ansprüche 1 bis 13,
**dadurch gekennzeichnet, daß** die Ermittlungen an Milch durchgeführt werden, die von einzelnen Tieren gewonnen wurde.

15. Verfahren nach einem der Ansprüche 1 bis 14,
**dadurch gekennzeichnet, daß** die Ermittlungen an Milch durchgeführt werden, die von separaten Eutervierteln gewonnen wurde.

16. Verfahren nach einem der Ansprüche 1 bis 15,
**dadurch gekennzeichnet, daß** die Werte und/oder die Verhältnisse von Werten miteinander sowie mit früheren Werten und/oder Werten von unterschiedlichen Eutervierteln verglichen werden und die Ergebnisse dieses Vergleichsvorganges angezeigt werden.

17. Verfahren nach einem der Ansprüche 1 bis 16,
**dadurch gekennzeichnet, daß** eine oder mehrere Ermittlungen durchgeführt werden, wenn ein Strömungssensor das Strömen der Milch anzeigt.

18. Verfahren nach einem der Ansprüche 1 bis 17,
**dadurch gekennzeichnet, daß** die Quelle Lichtquellen umfaßt, die die Milch nacheinander oder gleichzeitig mit rotem, grünem, blauem Licht bestrahlen und nacheinander oder gleichzeitig abgeschaltet werden.

19. Verfahren nach Anspruch 18,
**dadurch gekennzeichnet, daß** die Verhältnisse RG, RB und GB der gemessenen Strahlungsstärke wie folgt berechnet werden: RG = (r-a)/(g-a), RB = (r-a)/(b-a), GB = (g-a)/(b-a), wobei r die gemessene Strahlungsstärke während der Bestrahlung der Milch durch eine Quelle mit rotem Licht ist, g die gemessene Strahlungsstärke während der Bestrahlung der Milch durch eine Quelle mit grünem Licht, b die gemessene Strahlungsstärke während der Bestrahlung der Milch durch eine Quelle mit blauem Licht und a die gemessene Strahlungsstärke während des Zeitraumes, in dem die Lichtquellen abgeschaltet sind.

20. Verfahren nach Anspruch 19,
**dadurch gekennzeichnet, daß** die Verhältnisse RG, RB und GB mit Korrekturfaktoren multipliziert werden, die von den Eichwerten abhängen.

21. Verfahren nach einem der Ansprüche 1 bis 20,
**dadurch gekennzeichnet, daß** das Futter eines Tieres auf der Basis einer Untersuchung der Milch ermittelt wird.

## Revendications

1. Procédé de détermination de la qualité et/ou de la composition du lait, au moyen de mesures, procédé dans lequel :
une source irradie le lait successivement avec des radiations de différentes longueurs d'onde tandis que, pendant au moins une partie du temps où la source est sous tension, un récepteur constate les intensités de radiation réfléchie pendant une période ;
les valeurs des intensités de radiation ainsi obtenues sont stockées dans une mémoire ;
les valeurs sont comparées entre elles ainsi qu'avec les valeurs antérieures enregistrées au cours d'une mesure précédente et
les résultats de ce processus de comparaison sont indiqués, **caractérisé en ce que** pendant une mesure la source est mise hors tension tandis que, pendant au moins une partie du temps où la source est hors tension, le récepteur constate les intensités de radiation réfléchie pendant une période ; **en ce que** les valeurs des intensités de radiation ainsi obtenues sont stockées en tant que valeurs d'arrière-plan dans une mémoire ; **en ce que** les valeurs d'arrière-plan sont intégrées aux valeurs obtenues pendant la période où la source est sous tension ;et **en ce que** les valeurs ajustées par les valeurs d'arrière-plan sont stockées dans une mémoire.

2. Procédé selon la revendication 1, **caractérisé en ce que** un rapport des valeurs et/ou valeurs d'arrière-plan est déterminé.

3. Procédé selon la revendication 1 ou 2, **caractérisé en ce qu'**une valeur de calibrage est constituée par la moyenne progressive des valeurs et/ou rapports de valeurs obtenus pour un animal spécifique durant un nombre défini des traites les plus récentes.

4. Procédé selon l'une quelconque des revendications 1 à 3, **caractérisé en ce qu'**une valeur de calibrage est constituée par une mesure effectuée sur des moyens de calibrage tel qu'un liquide transparent, du lait de référence, une tige de calibrage, un liquide de rinçage ou de l'eau.

5. Procédé selon la revendication 3 ou 4, **caractérisé en ce que** les valeurs sont comparées avec des valeurs de calibrage précédentes.

6. Procédé selon l'une quelconque des revendications 1 à 5, **caractérisé en ce que** l'on compare les valeurs et/ou rapports de valeurs à la fois entre eux et avec des valeurs précédentes et/ou des valeurs de calibrage et/ou des rapports enregistrés pendant une ou plusieurs mesures antérieures et que les résultats de ce processus de comparaison sont indiqués.

7. Procédé selon la revendication 6, **caractérisé en ce que** les résultats de ce processus de comparaison sont affichés de telle manière que la présence et/ou la concentration de substances spécifiques, comme des contaminations dans le lait, peuvent être lues sur le champ.

8. Procédé selon l'une quelconque des revendications 1 à 7, **caractérisé en ce qu'**un récepteur supplémentaire reçoit la radiation directement de la source, et la valeur obtenue par le premier récepteur est ajustée à l'aide de la valeur obtenue par le récepteur supplémentaire.

9. Procédé selon la revendication 8, **caractérisé en ce qu'**un ou plusieurs rapports sont ajustés au moyen de valeurs obtenues par le récepteur supplémentaire recevant la radiation directement de la source.

10. Procédé selon l'une quelconque des revendications 1 à 9, **caractérisé en ce que** la source et le récepteur sont couplés à un signal périodique, tel qu'un signal carré ou un signal en dents de scie, ledit récepteur constatant l'intensité de la radiation quand la source a presque atteint une intensité constante.

11. Procédé selon l'une quelconque des revendications 1 à 10, **caractérisé en ce que** la source comprend des sources lumineuses émettant une radiation ayant une ou plusieurs longueurs d'onde séparées, lesquelles longueurs d'onde se rapportent à la caractéristique d'absorption de substances spécifiques dans le lait, telles que des protéines ou des graisses, que le récepteur constate l'intensité de radiation, que la présence et/ou la concentration d'une ou plusieurs substances dans le lait est établie.

12. Procédé selon l'une quelconque des revendications 1 à 11, **caractérisé en ce que** la mesure de la composition du lait comprend la mise en évidence de la présence et/ou quantité d'une ou plusieurs des substances suivantes : sang, urine, excréments, contamination, bactéries Escherichia coli, hormones, flocons, liquide de rinçage, air.

13. Procédé selon l'une quelconque des revendications 1 à 12, **caractérisé en ce que** la mesure de la composition du lait comprend la mise en évidence de la teneur en graisses et/ou la numération cellulaire et/ou une mammite et/ou du colostrum et/ou du lait d'herbe (lait produit après une consommation d'herbe).

14. Procédé selon l'une quelconque des revendications 1 à 13, **caractérisé en ce que** les mesures sont effectuées sur du lait produit par des animaux distincts.

15. Procédé selon l'une quelconque des revendications 1 à 14, **caractérisé en ce que** les mesures sont effectuées sur du lait provenant d'un trayon en particulier.

16. Procédé selon l'une quelconque des revendications 1 à 15, **caractérisé en ce que** l'on compare les valeurs et/ou rapports de valeurs entre eux ainsi qu'avec des valeurs antérieures et/ou des valeurs obtenues de différents trayons, et les résultats de ce processus de comparaison sont indiqués.

17. Procédé selon l'une quelconque des revendications 1 à 16, **caractérisé en ce qu'**une ou plusieurs mesures sont effectuées quand un capteur de flux indique que le lait s'écoule.

18. Procédé selon l'une quelconque des revendications 1 à 17, **caractérisé en ce que** la source comprend des sources lumineuses qui irradient le lait successivement ou simultanément avec des lumières de couleur rouge, verte, bleue et qui sont éteintes successivement ou simultanément.

19. Procédé selon la revendication 18, **caractérisé en ce que** l'on calcule les rapports RG, RB et GB des intensités de radiation constatées par les formules RG=(r-a)/(g-a), RB=(r-a)/(b-a), GB=(g-a)/(b-a), r étant l'intensité de radiation constatée pendant l'irradiation du lait par une source de lumière rouge, g étant l'intensité de radiation constatée pendant l'irradiation du lait par une source de lumière verte, b étant l'intensité de radiation constatée pendant l'irradiation du lait par une source de lumière bleue et a étant l'intensité de radiation constatée pendant la période où les sources lumineuses sont éteintes.

20. Procédé selon la revendication 19, **caractérisé en ce que** les rapports RG, RB et GB sont multipliés par des facteurs correctifs dépendant des valeurs de calibrage.

21. Procédé selon l'une quelconque des revendications 1 à 20, **caractérisé en ce que** l'alimentation d'un animal est établie sur la base d'une mesure sur le lait.
